# EUROPÄISCHE PATENTANMELDUNG

(11) **EP 2 199 153 A1**
(43) Veröffentlichungstag der Anmeldung: **23.06.2010**
(21) Anmeldenummer: 08172553.3
(22) Anmeldetag: 22.12.2008
(51) Int. Cl.: B60Q 3/02, B60Q 3/00, F21V 9/10, G02B 5/23

(54) **Lese- und/oder Sitzplatzleuchte für ein Fahrzeug**

(71) Anmelder: Goodrich Lighting Systems GmbH, 59557 Lippstadt (DE)
(72) Erfinder: Hessling, Andre, 56179, Vallendar (DE); Lueder, Sascha, 33397, Rietberg (DE)
(74) Vertreter: von Kreisler Selting Werner

(57) **Zusammenfassung**

Eine Lese- und/oder Sitzplatzleuchte (10) für ein Fahrzeug, insbesondere zum Einbau oberhalb eines Fahrzeugsitzes eines Fahrzeuges wie z.B. eines Flugzeuges ist versehen mit einer Lichterzeugungseinheit (16), die mindestens einer weißes Licht emittierenden LED aufweist, und einem phototropen Filter (20), der das aus der Lichterzeugungseinheit (16) austretende Licht auf einen Zielwert adaptiv dimmt.

## Beschreibung

Die Erfindung betrifft eine Lese- und/oder Sitzplatzleuchte für ein Fahrzeug und insbesondere eine Leseleuchte, die zum Einbau oberhalb eines Fahrgastsitzes eines Fahrzeuges geeignet ist. Bei diesem Fahrzeug handelt es sich beispielsweise um ein Personentransportmittel wie z.B. einen Reisebus oder Flugzeug.

In zunehmendem Maße werden zur Innenbeleuchtung in Fahrzeugen als Lichtmittel LEDs eingesetzt. Insbesondere nachdem in den letzten Jahren weißes Licht aussendende LEDs am Markt erhältlich sind, ist ein noch verstärkter Trend zur Applikation von LEDs in Fahrzeugen zu beobachten.

Bei LEDs ist ein veränderliche Lichtleistung über ihre Lebensdauer fortzustellen (Alterungseffekt). Dazu kommt zusätzlich eine signifikante Streuung der Lichtleistung über einzelnen LED-Leuchtmittel. Weiterhin steigen besonders bei LEDs aufgrund der verbesserten Produktionsprozesse und der Technologie-Entwicklung die Lichtleistungen stetig. Die Anwendung von LEDs für eine Lese- und/oder Sitzplatzleuchte anfordern relativ enge Grenzen für die Beleuchtungsstärke, und zwar sowohl in Hinsicht auf maximale, als auch die minimale Beleuchtungsstärke.

Um eine gezielte Beleuchtungsstärke zu erreichen, ist es bekannt, bei einer Lichtquelle eine optische Schicht vorzusehen, deren Transmissionsgrad von elektrischen Größen gesteuert wird. Aus DE-A-10 2006 053534 ist ein LED-Element mit Ausblendvorrichtung bekannt. Das LED-Element umfasst eine optische Schicht, die über einem LED-Schaltkreis in elektronisch integrierter Bauweise angeordnet ist, und welche ein Material enthält, das Lichtdurchlässigkeitseigenschaften aufweist, die sich als Reaktion auf elektrische Größen, denen die optische Schicht ausgesetzt wird, verändern. Die optische Schicht kann somit vom LED-Schaltkreis ausgehendes Licht entweder hindurchtreten lassen oder absorbieren, wodurch vom LED-Schaltkreis ausgehendes Licht ausgeblendet oder gefiltert wird. Weitere optische Schicht mit von elektrischen Größen steuerbarem Transmissionsgrad ist in JP-A-05-036303 beschrieben.

Ferner ist es bekannt, Filter zu benutzen, um Licht zu beeinflussen. Eine LED-Leuchte mit einem Filter, das die aus der LED-Leuchte austretende Lichtfarbe oder Lichtintensität ändern kann, ist aus US-B-6 623 142 bekannt. Das Filter wird gezielt und lokal nach Farbänderung oder Intensitätsänderung des Lichts mit bestimmten örtlich begrenzt aufgebrachten Farbstoffen ausgebildet. Damit soll eine Vergleichmäßigung der Farbe und Intensität des austretenden Licht über die Lichtaustrittsfläche erzielt werden. Alterungseffekte (Veränderungen der lichttechnischen Parameter der LED-Leuchte) werden hierbei nicht betrachtet.

Die weiteren bekannten Filter werden meistens zur Farbauswahl/-regelung an/in der Leuchte eingesetzt. EP-A-1 190 903 beschreibt eine Flugzeug-Leseleuchte mit einer Filterfunktion, die sich lediglich auf das ambiente Licht beschränkt, welches keinen Einfluss auf die auszuleuchtende Zielfläche hat. Das ursprünglich emittierte Licht wird durch Transmission durch das Filter gesteuert. Es ist kein Reflektor im eigentlichen Sinn verantwortlich für die Veränderung der Lichtfarbe. Beide Funktionen, nämlich Reflektion/Lichtweiterleitung und Filterung/Manipulation der Lichtfarbe, sind voneinander getrennt. Zudem wird nicht die Gesamtheit des abgestrahlten Lichtes gesteuert. Es handelt sich lediglich um eine geringe Teilmenge des Gesamtlichtstroms der LED, welche durch das Filter verändert wird,

Des weiteren ist ein Filter aus photochromatischem Material bekannt. Dabei werden photochrome Eigenschaften bestimmter Materialien ausgenutzt. Unter Photochromie versteht man die lichtinduzierte reversible Umwandlung zweier Spezies ineinander unter Änderung des Absorptionsspektrums sowie damit einhergehend ihrer physikalischen Eigenschaften. Ein zur Photochromie synonymer Begriff ist der Begriff Phototropie, der oftmals in Zusammenhang mit Gläsern verwendet wird. Hier ist mit Phototropie die reversible Veränderung der Lichtdurchlässigkeit gemeint. Dieser Effekt wird z.B. bei Sonnenbrillen genutzt.

Photochromatische Filter werden bisher zumeist bei Bildschirmen eingesetzt (siehe WO-A-98/30923).

Wegen der Streuung der Lichtleistung der LEDs und deren Alterung ist es nur mit erhöhten Aufwand möglich, die Forderungen der Hersteller von Fahrzeugen mit einer vielen Zahl von Sitzplatz- bzw. Leseleuchte nach gleicher Lichtabstrahlleistung zu erfüllen.

Eine Aufgabe der Erfindung ist es, eine Lese- und/oder Sitzplatzleuchte für ein Fahrzeug zu schaffen, die trotz variabler Lichtleistung der LED-Lichtquelle mit einfachen Mitteln über ihre Lebensdauer eine gleichbleibende Lichtabgabe aufweist.

Zur Lösung dieser Aufgabe wird mit der Erfindung eine Lese- und/oder Sitzplatzleuchte für ein Fahrzeug, insbesondere zum Einbau oberhalb eines Fahrgastsitzes eines Fahrzeuges wie z.B. eines Flugzeuges, vorgeschlagen, wobei die Leseleuchte versehen ist mit
- einem Gehäuse, das eine Lichtaustrittsseite aufweist,
- einer in dem Gehäuse angeordneten Lichterzeugungseinheit, die mindestens eine LED-Lichtquelle zur Abgabe von Licht längs einer optischen Achse aus der Lichtaustrittsseite des Gehäuses im sichtbaren Wellenlängebereich (und insbesondere mit einer vorgegebenen Lichtintensität) aufweist, und
- einem auf der optischen Achse angeordneten phototropen Filter zur Steuerung der Intensität des aus der Lichtaustrittsseite austretenden Lichts der LED-Lichtquelle. (insbesondere wenn die Intensität der LED-Lichtquelle größer ist als die vorgegebene Lichtintensität)

Die erfindungsgemäße Lese- und/oder Sitzplatzleuchte ist mit einem Gehäuse und einer in dem Gehäuse angeordneten Lichterzeugungseinheit versehen. Zur Abgabe von Licht im sichtbaren Wellenlängebereich weist die Lichterzeugungseinheit mindestens eine (erste) LED-Lichtquelle auf. Die LED-Lichtquelle weist ein Alterungsverhalten auf, indem sich die Strahlungsintensität der LED-Lichtquelle über die Betriebs-(Lebens)-dauer abschwächt.

Um das aus der Leseleuchte austretende Licht trotz der sich im Laufe der Zeit abschwächenden Lichtintensität der LED-Lichtquelle konstant zu halten, weist die Leseleuchte erfindungsgemäß ein phototropes Filter auf. Das lichtdurchlässige phototrope Material (mitunter in der Literatur auch als photochrom bezeichnet) des Filters vermindert seinen Transmissionsgrad im sichtbaren und ultravioletten Spektralbereich bei Bestrahlung mit Licht, wobei diese Effekt wieder zurückgeführt wird, wenn die Lichtintensität abnimmt. Mit sich verringernder Lichtaustrittsleistung der LED-Lichtquelle erhöht sich also der Transmissionsgrad des phototropen Filters, so dass insgesamt das aus der Leseleuchte austretende Licht über die Betriebsdauer der LED-Lichtquelle in wesentliche konstant bleibt.

Herkömmlich müssen LEDs vor einer Anwendung lichttechnisch vermessen werden. Die vermessenen LEDs werden dann ihrer Lichtintensität entsprechend vorselektiert oder klassifiziert. Vorteilhaft können LEDs für diese erfindungsgemäße Leseleuchte ohne, oder mit wesentlich gröberer Vorselektierungsklassifizierung verwendet werden, da die Empfindlichkeit für die Helligkeitsschwankungen zwischen verschiedenen LED-Leuchtmitteln durch das phototrope Filter wesentlich reduziert werden können. Diese adaptiven Eigenschaften des phototropen Filters bewirken eine angepasste Dimmung, wenn die Intensität des austretenden Lichts der LED größer als eine vorgegebene Lichtintensität ist. Wenn die Lichtintensität des auf das Filter auftreffende Lichts der LED-Lichtquelle geringer wird, erhöht sich die Transmission des Filters automatisch.

Wie eine LED-Lichtquelle weist auch das phototrope Filter ein Alterungsverhalten auf, indem die Verdunkelungseigenschaften über die Betriebs-(Lebens)-dauer weniger intensiv, d.h. sich der Transmissionsgrad des Filters erhöht sein kann. Diese Eigenschaft ist besonders wünschenswert, da das Alterungsverhalten der LED damit kompensiert werden kann. Über die Zeit nimmt die Lichtintensität der LED ab, was mit einer Reduzierung des Verdunklungsgrades des Filters zu einem besonders gleichmäßigen Austrittslicht der Leuchte genutzt werden kann.

Lichtdurchlässiges phototropes Material verändert seinen Transmissionsgrad bei Bestrahlung mit ultraviolettem Licht oder sichtbarem Licht (insbesondere im unteren Wellenlängenbereich). Die meisten aktuell produzierten phototropen Filter werden durch UV-Licht angeregt. Aktuell erhältliche weiße LEDs auf Basis von blauen LEDs haben nur einen sehr geringen UV-Anteil, der unter Umständen nicht ausreichend ist, um das phototrope Filter zu steuern. Um den Transmissionsgrad des phototropen Filters besser steuern zu können, weist die Lichterzeugungseinheit der erfindungsgemäßen Leseleuchte vorteilhafterweise eine UV-Lichtquelle auf. Die UV-Lichtquelle kann als eine (zweite) UV-LED ausgebildet sein. Diese UV-LED weist ein Alterungsverhalten auf, das etwa gleich dem Alterungsverhalten der ersten LED ist. Auf eine separate UV-LED kann verzichtet werden, wenn als LED-Lichtquelle für die Lese- bzw. Sitzplatzleuchte auf eine weiße LED auf Basis eines UV-Emitters (mit Konversionsmaterial) zurückgegriffen wird.

Die Erfindung wird nachfolgend anhand eines Ausführungsbeispiels und unter Bezugnahme auf die Zeichnung näher erläutert, Im einzelnen zeigen:
- Fig. 1: ein Ausführungsbeispiel einer erfindungsgemäßen Leseleuchte mit einem phototropen Filter,
- Fig. 2a: den Intensitätsverlauf einer LED über ihre Betriebs- (Lebens)-dauer,
- Fig. 2b: den Transmissionsgradverlauf des phototropen Filters über die Lichtintensität,
- Fig. 2c: den Transmissionsgradverlauf des phototropen Filters über die Zeit und
- Fig. 2d: den Intensitätsverlauf des gesamten austreten Lichts der Leseleuchte über die Zeit.

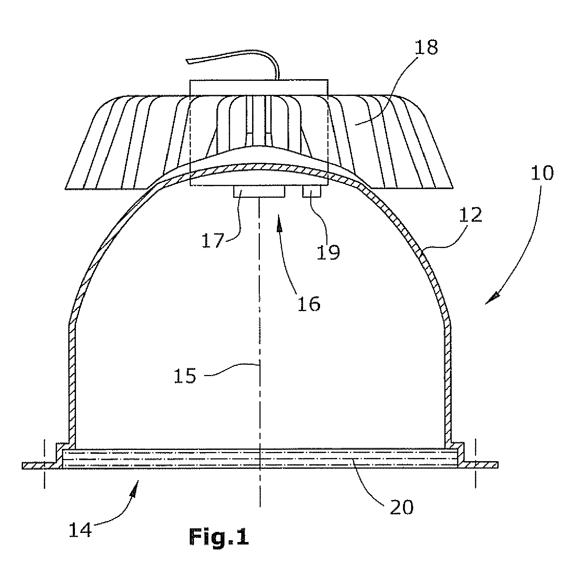

Fig. 1 zeigt ein Ausführungsbeispiel einer Leseleuchte 10 im Querschnitt, die ein Gehäuse 12 mit einer Lichtaustrittsseite 14 und eine im Gehäuse 12 angeordnete Lichterzeugungseinheit 16 aufweist. Zur Abgabe von Licht längs einer optischen Achse 15 weist diese Lichterzeugungseinheit 16 eine (erste) LED-Lichtquelle 17 auf, die mit einer LED bzw. einem LED-Modul (das heißt mehrere LED-Chips auf einem gemeinsamen Header) versehen ist. Die LED-Lichtquelle 17 wird mittels eines Kühlkörpers 18 gekühlt.

Zur Steuerung des aus der Lichtaustrittsseite 14 des Gehäuses 12 austretenden Lichts der LED-Lichtquelle 17 ist ein phototroper Filter 20 an der Lichtaustrittsseite 14 angeordnet. Das von der LED-Lichtquelle 17 emittierte Licht wird durch das phototrope Filter 20 gedimmt, wenn die Lichtaustrittsleistung zu stark ist. Mit sich verringernder Lichtaustrittsleistung der LED-Lichtquelle 17 (infolge von deren Alterung) erhöht sich also der Transmissionsgrad des phototropen Filters 20, so dass insgesamt das aus der Leseleuchte 10 austretende Licht in wesentlichen konstant bleibt. Um den Transmissionsgrad des phototropen Filters 20 besser steuern zu können, weist die Lichterzeugungseinheit 16 der erfindungsgemäßen Leseleuchte 10 vorteilhafterweise eine UV-Lichtquelle 19 auf. Die UV-Lichtquelle 19 kann als eine (zweite) UV-LED ausgebildet sein. Diese UV-LED weist ein Alterungsverhalten auf, das etwa gleich dem Alterungsverhalten der ersten LED-Lichtquelle 17 ist.

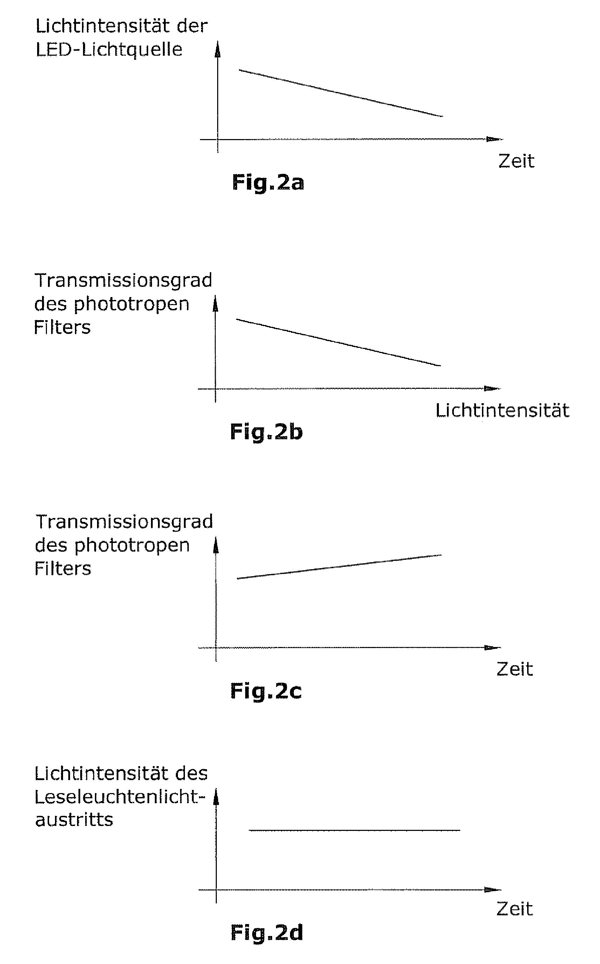

Fig. 2a zeigt qualitativ den Intensitätsverlauf der LED-Lichtquelle über ihre Betriebs-(Lebens)-dauer. Die LED-Lichtquelle 17 weist ein Alterungsverhalten auf, und zwar dergestalt, dass sich die Strahlungsintensität der LED-Lichtquelle 17 über die Betriebs-(Lebens)-dauer abschwächt.
Fig. 2b zeigt einen Transmissionsgradverlauf von phototropem Material über die Lichtintensität. Das lichtdurchlässige phototrope Material des phototropen Filters 20 vermindert seinen Transmissionsgrad mit zunehmender Lichtintensität.

Fig. 2c zeigt den Transmissionsgradverlauf von phototropem Material über die Zeit (Alterung). Infolge der Alterung vermindert das lichtdurchlässige phototrope Material des phototropen Filters 20 seinen Transmissionsgrad über die Zeit,

Fig. 2d zeigt den Intensitätsverlauf des gesamten austretenden Lichts der Leseleuchte 10 über die Zeit. Im Laufe der Zeit bleibt insgesamt das aus der Leseleuchte 10 austretende Licht in wesentlichen konstant, da sich die Alterungs- und physikalischen Effekte der LED-Lichtquelle 17 und des phototropen Filters 20 kompensieren.

## Patentansprüche

1. Lese- und/oder Sitzplatzleuchte (10) für ein Fahrzeug, insbesondere zum Einbau oberhalb eines Fahrzeugsitzes eines Fahrzeuges wie z.B, eines Flugzeuges, mit
- einem Gehäuse (12), das eine Lichtaustrittsseite (14) aufweist,
- einer in dem Gehäuse (12) angeordneten Lichterzeugungseinheit (16), die mindestens eine LED-Lichtquelle (17) zur Abgabe von Licht längs einer optischen Achse (15) aus der Lichtaustrittsseite (14) des Gehäuses (12) im sichtbaren Wellenlängebereich aufweist, und
- einem auf der optischen Achse (15) angeordneten phototropen Filter (20) zur Steuerung der Intensität des aus der Lichtaustrittsseite (14) austretenden Lichts der LED-Lichtquelle (17).

2. Lese- und/oder Sitzplatzleuchte (10) nach Anspruch 1, **dadurch gekennzeichnet, dass** die LED-Lichtquelle (17) auch zur Abgabe von Licht in UV-Bereich zur Steuerung des Transmissionsgrades des phototropen Filters (20) vorgesehen ist.

3. Lese- und/oder Sitzplatzleuchte (10) nach Anspruch 1, **dadurch gekennzeichnet, dass** die Lichterzeugungseinheit (16) eine UV-Lichtquelie (19) zur Steuerung des Transmissionsgrades des phototropen Filters (20) aufweist.

4. Lese- und/oder Sitzplatzleuchte (10) nach Anspruch 3, **dadurch gekennzeichnet, dass** die UV-Lichtquelle (19) eine UV-LED ist.

5. Lese- und/oder Sitzplatzleuchte (10) nach einem der Ansprüche 1 bis 4, **dadurch gekennzeichnet, dass** das phototrope Filter (20) in/an dem Gehäuse (12) angeordnet ist.
